# EUROPEAN PATENT SPECIFICATION

(11) **EP 2 896 385 B1**
(45) Date of publication and mention of the grant of the patent: **10.01.2018**
(21) Application number: 14151849.8
(22) Date of filing: 21.01.2014
(51) Int. Cl.: A61C 19/04

(54) **Periodontal probe**
Periodontale Sonde
Sonde parodontique

(43) Date of publication of application: 22.07.2015
(73) Proprietor: Oulu University of Applied Sciences, 90220 Oulu (FI)
(72) Inventor: Heikka, Helena, 90101 Oulu (FI); Matalalampi, Timo, 90101 Oulu (FI)
(74) Representative: Kolster Oy Ab

(56) References cited:
- EP-A2- 0 286 067
- EP-A2- 0 296 520
- DE-A1- 4 441 441
- FR-A1- 2 662 599
- US-A- 5 144 753

## Description

### FIELD OF THE INVENTION

The present invention relates to a periodontal probe for measuring depth of a gum pocket, and more particularly to what is stated in the independent claim 1.

### BACKGROUND OF THE INVENTION

A periodontal probe is an instrument in dentistry that is used for measuring periodontal pocket depths around a tooth in order to establish the state of health of the periodontal pocket. Typical periodontal probe comprises a thin tip which is easy to put into the periodontal pocket.

Publication US 4904184 discloses a periodontal probe instrument for measuring the depth of a periodontal pocket in the gingiva adjacent a tooth. The periodontal probe instrument includes a probe handle member in which a displacement sensor and a probe element are mounted. The probe element includes an external end and is disposed adjacent and parallel to the displacement sensor. A tip of the displacement sensor is aligned with the external end of the probe element in a first reference position. A pressure transducer is mounted in the handle member for generating a first output signal indicative of the magnitude of the force applied. A displacement transducer is mounted in the handle member for constantly encoding the displacement of the tip of the displacement sensor as it is moved from the first position to a second position to generate a second output signal indicative of the depth of the periodontal pocket. A comparator circuit is provided for generating a logic signal only when the first output signal is in the range between a low threshold signal and a high threshold signal. An indicator is responsive to the logic signal to produce an indication to generate an actuation signal. In response to the indication to generate an actuation signal, a switch is operated to cause a computer to read the second output signal indicative of the depth of the periodontal pocket.

One of the disadvantages associated with the above arrangement is that the periodontal probe comprises a separate probe part to be placed into the periodontal pocket and a separate sleeve part for movable flexible wire that is to be arranged in contact with the gingival margin. This makes the periodontal probe arrangement complex and complicated to use.

### BRIEF DESCRIPTION OF THE INVENTION

An object of the present invention is thus to provide a periodontal probe so as to alleviate the above disadvantages. The objects of the invention are achieved by a periodontal probe which is characterized by what is stated in the independent claim. The preferred embodiments of the invention are disclosed in the dependent claims.

The invention is based on the idea of measuring the depth of a gum pocket with a simple and reliable measurement device that sends information about the depth of the gum pocket wirelessly to a computer or similar.

The invention relates to a periodontal probe for measuring depth of a gum pocket. The periodontal probe comprises a handle portion and a probe portion and a passage extending from the handle portion through the probe portion. Said periodontal probe further comprises measuring means extending in the passage inside the periodontal probe from the handle portion through the probe portion and at least partly outside of the probe portion such that a part of the measuring means outside of the probe portion is to be inserted in the gum pocket. The measuring means extend in a passage inside the periodontal probe and said measuring means are arranged movably in relation to the passage of the periodontal probe. The part of the measuring means that is outside of the probe portion comprises a part to be inserted in the gum pocket. The periodontal probe further comprises a magnet arranged in a magnetic contact with the measuring means for providing a force to the measuring means for controlling the movement of said measuring means and a sensor for measuring the movement of said measuring means within the passage in order to get the measurement data of the depth of the gum pocket. The sensor is preferably an accelerometer. Said accelerometer is arranged to detect movement of the measuring means with the probe portion when said measuring means is arranged into the gum pocket and also to detect the point when the measuring means make contact with the bottom of the gum pocket in which the measuring means start to move in relation to the probe portion inwards into the probe portion through the passage in the probe portion. In another embodiment of the invention the sensor may be an algorithm which uses information about position of the measuring means when the tip of the measuring means is arranged in a gum pocket or during movement in the gum pocket.

The periodontal probe according to the invention is to be arranged in the gum pocket of the patient to be examined such that the tip of the measuring means that is outside of the probe portion is first arranged such that it is on the margin of the gum, i.e. in the region where the top part of the gum and tooth are connected together. When the periodontal probe is on the margin of the gum the user of the periodontal probe pushes a button or the periodontal probe some other way gets the information that the tip of the measuring means is on the edge of the gum and an acceleration sensor starts sensing the movement of the measuring means in relation to the passage of the periodontal probe. The other way of getting the information is for example that the periodontal probe when using a constant force senses automatically the position of the periodontal probe. The tip of the measuring means is inserted into the gum pocket which is the part of the gum next to the tooth that is not attached to the tooth so as to form a gum pocket and while the tip is inserted into the pocket there is no relative movement between the measuring means and the passage in the periodontal probe. The part of the measuring means that is outside of the probe portion is preferably 12 - 15 mm. The accelerometer in the periodontal probe measures the unevenness of the tooth enamel and the end of the tooth enamel. The unevenness of the tooth is measured so that deviations in the tooth, for example dental calculus, can be detected. The unevenness of the tooth enamel can be estimated by calculating the standard deviation of the accelerometer signal when the probe is moving along the tooth. The larger the standard deviation is, the rougher the surface. The measuring means that is outside of the probe portion does not move in relation to the passage in the periodontal probe before the tip of the measurement reaches the bottom of the gum pocket. In other words when the tip of the measuring means is moved toward the bottom of the gum pocket the measuring means and the probe portion move together so that there is no relative movement between them. When the tip of the measuring means is in contact with the bottom of the gum pocket, the user of the periodontal probe pushes the probe portion such that it comes into contact with the top part of the gum, i.e. so that the end of the probe portion from which the measuring means protrudes out from the probe portion is on the edge of the gum. When the probe portion moves toward the gum the measuring means stays on its position and there is relative movement between the measuring means and the passage of the periodontal probe. When the movement of the probe portion starts the acceleration sensor detects the movement and sends a signal to the sensor which measures the movement of the measuring means in relation to the probe portion during the movement while the probe portion moves toward the tip of the measuring means, i.e. the part of the measuring means that was out from the probe portion becomes smaller while part of it becomes covered by the probe portion. So when the user pushes the probe portion toward the gum the measuring means moves in relation to the probe portion. When the probe portion is in contact with the top part of the gum the user stops pushing the probe portion and the probe portion stops moving in relation to the measuring means. Measuring means preferably comprises a probe fibre that is the part comprising the tip to be inserted in the gum pocket and a friction fibre that is influenced by the magnet. The sensor is preferably in contact with the friction fibre and sends the measurement results further to a computer wirelessly. When the measurement action has ended the user pulls the periodontal probe out from the patient's mouth which means that the measuring means comes out from the periodontal pocket.

The magnet of the periodontal probe is in a magnetic contact with the measuring means for providing a force to the measuring means for controlling the movement of said measuring means. The magnet is arranged to draw the measuring means toward a friction surface arranged inside in the handle portion of the periodontal probe. When the measuring means comprises a probe fibre and a friction fibre the magnet is preferably arranged to provide a force to the friction fibre such that the friction fibre is drawn toward a friction surface arranged in the handle portion of said periodontal probe. The friction surface may be for example one side of the passage in which the friction fibre is movably arranged. In a preferred embodiment of the invention the magnet is a permanent magnet arranged in a guiding structure for directing magnetic flux within said structure. The structure preferably comprises a threaded part in the outer surface of the structure such that the handle portion comprising corresponding threads makes a connection with the structure. The magnet is preferably arranged in a frame structure comprising means for connecting the frame structure in the handle portion. The means for connecting the frame structure in the handle portion is preferably a threaded portion in the frame structure and said handle portion comprising a corresponding threaded portion for receiving said frame structure. The guiding structure is preferably a frame structure for connecting the magnet in the handle portion.

An advantage of the periodontal probe according to the invention is that the magnet provides a constant force that does not change during measuring event but the force can be adjusted if this is needed. The magnet does not lose its effect as the spring does over time. An advantage of the threaded portion in the frame structure in which the magnet is arranged is that the magnetic force can be adjusted by screwing it.

### BRIEF DESCRIPTION OF THE DRAWINGS

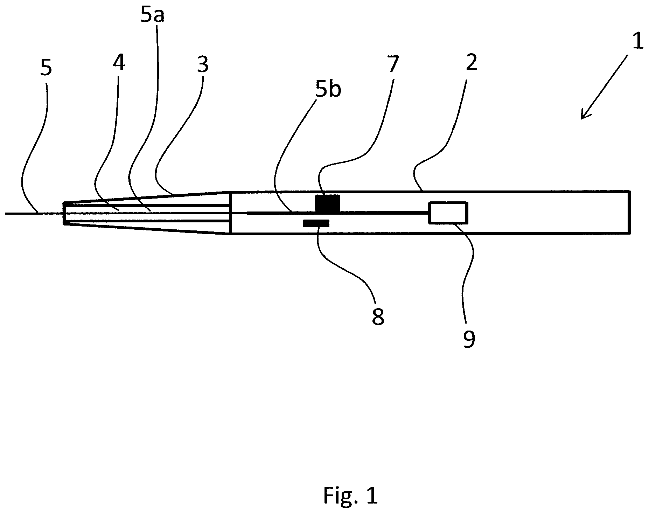

In the following the invention will be described in greater detail by means of preferred embodiments with reference to the attached drawing, in which
Figure 1 shows a periodontal probe according to the invention.

### DETAILED DESCRIPTION OF THE INVENTION

Figure 1 shows a periodontal probe 1 for measuring depth of a gum pocket. The periodontal probe 1 comprises a handle portion 2 and a probe portion 3. A user of the periodontal probe 1 holds the handle portion 2 in hand when using the periodontal probe and the probe portion 3 is partly arranged in the mouth of the patient to be examined. The periodontal probe 1 further comprises a passage 4 extending inside the periodontal probe 1 from the handle portion 2 and through the probe portion 3. The periodontal probe 1 also comprises measuring means 5 arranged movably in relation to the probe portion 3 and to the handle portion 2 such that the measuring means 5 extend in the passage 4 inside the periodontal probe 1 from the handle portion 2 through the probe portion 3 and at least partly outside of the probe portion 3. The measuring means 5 may be divided into a probe fibre 5a and a friction fibre 5b, which the probe fibre operates mostly within the probe portion 3 and outside of the periodontal probe 1 and the friction fibre operates mostly in the handle portion 2. The friction fibre 5b and the probe fibre 5a are connectable together for forming a continuous measuring means 5. So the friction fibre 5b is connectable to the probe fibre 5a for forming a continuous measuring means, or vice versa. The measuring means 5 protrude out from the probe portion through an aperture in the probe portion 3. The measuring means 5 that is outside of the probe portion 3 comprises a tip that is to be inserted in the gum pocket of the patient. So only a part of the measuring means 5 that is outside of the probe portion 3 is to be inserted in the gum pocket. So the measuring means 5 comprising a probe fibre 5a i movable in the probe portion 3 and having a tip to be inserted in the bottom of the gum pocket, and a friction fibre 5b being movable inside the handle portion 2.

The periodontal probe 1 further comprises a magnet 7 arranged at least partly inside the periodontal probe 1 and preferably in the handle portion 2 of said periodontal probe 1. The magnet 7 is arranged in a magnetic contact with the measuring means 5 for providing a force to the measuring means 5 for controlling the movement of said measuring means 5. The magnet 7 is preferably arranged in the handle portion 2 such that the magnetic contact with the measuring means is arranged to draw the measuring means and especially when the measuring means comprises a probe fibre 5a and a friction fibre 5b, the friction fibre 5b toward a friction surface arranged in the handle portion of said periodontal probe 1. The friction surface is for example the passage 4 in which the friction fibre 5b moves. The friction fibre 5b preferably comprises ferromagnetic material. The magnet 7 may comprise a structure for connecting the magnet 7 to the handle portion 2 for example with a thread connection. When the magnet is a permanent magnet the structure may also serve as a guiding structure for directing magnetic flux to a preferred position. In other words the permanent magnet may be arranged in a guiding structure for directing magnetic flux. So the magnet 7 may be arranged in a frame structure comprising means for connecting the frame structure in the handle portion 2 which at the same time may serve as a guiding structure for magnetic flux. The means for connecting the frame structure in the handle portion 2 may comprise a threaded portion in the frame structure and said handle portion 2 comprises a corresponding threaded portion for receiving said frame structure. The means for connecting the frame structure in the handle portion 2 may alternatively be a form-fitting connection or some other suitable connection. Alternatively the magnet may be an electromagnet.

The periodontal probe 1 further comprises a sensor 8 for measuring the movement of said measuring means 5 within the probe portion 3 and the handle portion 2. Said sensor 8 is preferably arranged in the handle portion 2 and it measures the movement of the friction fibre in the passage 4 in the handle portion 2. The friction fibre 5b is connected to the probe fibre 5a which together form a continuous measuring means 5 that moves in the passage 4 of the periodontal probe 1. The sensor 8 may be an optical sensor for detecting the movement of the measuring means in relation to the probe and handle portion. When the sensor 8 is arranged in the handle portion 2 it detects the movement of the measuring means 5 in the handle portion 2. The sensor 8 may alternatively be a measurement stripe sensor which comprises a linear measurement stripe and a sensor part which gives an electrical signal when the measurement stripe moves. The measurement stripe is in connection with the measuring means.

The periodontal probe 1 further comprises a return mechanism 9 for moving the measuring means after the measurement action is finished. The return mechanism is preferably a return solenoid for moving the measuring means 5 in a starting position after a measurement process. So the periodontal probe 1 further comprising a return solenoid for moving the measuring means 5 in a starting position after a measurement process.

The probe portion 3 may be releasably attached to the handle portion 2 such that the probe portion 3 may be changed while the handle portion 2 remains the same from patient to patient. The probe portion 3 in this figure is straight but the preferred form of the probe portion 3 is bent having an angle approximately 45°. Other forms are also possible.

It will be obvious to a person skilled in the art that, as the technology advances, the inventive concept can be implemented in various ways. The invention and its embodiments are not limited to the examples described above but may vary within the scope of the claims.

## Claims

1. A periodontal probe (1) for measuring periodontal pocket depth, said periodontal probe (1) comprising a handle portion (2), a probe portion (3) and a passage (4) extending from the handle portion (2) through the probe portion (3), wherein the periodontal probe (1) further comprises:
- measuring means (5) extending in the passage (4) inside the periodontal probe (1) from the handle portion (2) through the probe portion (3) and at least partly outside of the probe portion (3) such that a part of the measuring means (5) outside of the probe portion (3) is to be inserted in the gum pocket, said measuring means (5) are arranged movably in relation to the passage (4);
- a magnet (7) arranged at least partly inside the periodontal probe (1) and said magnet (7) is arranged in a magnetic contact with the measuring means (5) for providing a force to the measuring means (5) for controlling the movement of said measuring means (5), the magnet (7) is arranged to draw the measuring means (5) toward a friction surface arranged inside in the handle portion (2) of the periodontal probe (1); and
- a sensor (8), **characterized in that** the sensor (8) is an accelerometer and is arranged to measure the movement of said measuring means (5) within the passage (4) and to measure the unevenness of the tooth enamel and the end of the tooth enamel such that the deviations in the tooth can be detected, the unevenness of the tooth enamel is estimated by calculating the standard deviation of the accelerometer signal when the probe is moving along the tooth such that the larger the standard deviation, the rougher is the surface.

2. A periodontal probe (1) according to claim 1, **characterized in that** the magnet (7) is arranged to draw the measuring means (5) toward a friction surface arranged inside in the handle portion (2) of said periodontal probe (1).

3. A periodontal probe (1) according to claim 1 or 2, **characterized in that** the magnet (7) is arranged in a frame structure comprising means for connecting the frame structure in the handle portion (2).

4. A periodontal probe (1) according to claim 3, **characterized in that** the means for connecting the frame structure in the handle portion (2) is a threaded portion in the frame structure and said handle portion (2) comprising a corresponding threaded portion for receiving said frame structure.

5. A periodontal probe (1) according to any previous claim, **characterized in that** the magnet is a permanent magnet.

6. A periodontal probe (1) according to claim 5, **characterized in that** the permanent magnet is arranged in a guiding structure for directing magnetic flux.

7. A periodontal probe (1) according to claim 6, **characterized in that** the guiding structure is a frame structure for connecting the magnet (7) in the handle portion (2).

8. A periodontal probe (1) according to any previous claim, **characterized in that** the magnet (7) is an electromagnet.

9. A periodontal probe (1) according to claim 1, **characterized in that** the sensor (8) is an optical sensor for detecting the movement of the measuring means (5) in relation to the handle portion (2).

10. A periodontal probe (1) according to any previous claim, **characterized in that** the periodontal probe (1) further comprising a return solenoid for moving the measuring means (5) in a starting position after a measurement process.

11. A periodontal probe (1) according to any previous claim, **characterized in that** said measuring means (5) comprising a probe fibre (5a) being movable in the probe portion (3) and having a tip to be inserted in the bottom of the gum pocket, and a friction fibre (5b) being movable inside the handle portion (2).

12. A periodontal probe (1) according to claim 11, **characterized in that** the friction fibre (5b) being connectable to a probe fibre (5a) for forming a continuous measuring means (5).

13. A periodontal probe (1) according to claim 11 or 12, **characterized in that** the friction fibre (5b) comprises ferromagnetic material.

## Patentansprüche

1. Periodontale Sonde (1) zum Messen der Tiefe einer periodontalen Tasche, wobei die periodontale Sonde (1) einen Griffabschnitt (2), einen Sondenabschnitt (3) und einen Durchgang (4) umfasst, der sich von dem Griffabschnitt (2) durch den Sondenabschnitt (3) erstreckt, wobei die periodontale Sonde (1) weiter umfasst:
- Messmittel (5), die sich in dem Durchgang (4) innerhalb der periodontalen Sonde (1) von dem Griffabschnitt (2) durch den Sondenabschnitt (3) und mindestens teilweise außerhalb des Sondenabschnitts (3) erstrecken, sodass ein Teil der Messmittel (5) außerhalb des Sondenabschnitts (3) in die Zahnfleischtasche einzusetzen ist, wobei die Messmittel (5) in Bezug auf den Durchgang (4) beweglich eingerichtet sind;
- einen Magnet (7), eingerichtet mindestens teilweise innerhalb der periodontalen Sonde (1) und wobei der Magnet (7) in einem magnetischen Kontakt mit den Messmitteln (5) zur Bereitstellung einer Kraft für das Messmittel (5) zum Steuern der Bewegung des Messmittels (5) eingerichtet ist, wobei der Magnet (7) zum Ziehen der Messmittel (5) zu einer Reibungsfläche, eingerichtet innen in dem Griffabschnitt (2) der periodontalen Sonde (1), eingerichtet ist; und
- einen Sensor (8), **dadurch gekennzeichnet, dass** der Sensor (8) ein Beschleunigungsaufnehmer ist und zum Messen der Bewegung des Messmittels (5) in dem Durchgang (4) und zum Messen der Unebenheit des Zahnschmelzes und des Endes des Zahnschmelzes eingerichtet ist, sodass die Abweichungen in dem Zahn nachgewiesen werden können, wobei die Unebenheit des Zahnschmelzes durch Berechnung der Standardabweichung des Beschleunigungsaufnehmersignals geschätzt wird, wenn die Sonde entlang des Zahns bewegt wird, sodass je größer die Standardabweichung ist, desto rauer die Oberfläche ist.

2. Periodontale Sonde (1) nach Anspruch 1, **dadurch gekennzeichnet, dass** der Magnet (7) zum Ziehen der Messmittel (5) zu einer Reibungsfläche, eingerichtet innen in dem Griffabschnitt (2) der periodontalen Sonde (1), eingerichtet ist.

3. Periodontale Sonde (1) nach Anspruch 1 oder 2, **dadurch gekennzeichnet, dass** der Magnet (7) in einem Rahmenaufbau, umfassend Mittel zum Verbinden des Rahmenaufbaus in dem Griffabschnitt (2), eingerichtet ist.

4. Periodontale Sonde (1) nach Anspruch 3, **dadurch gekennzeichnet, dass** das Mittel zum Verbinden des Rahmenaufbaus in dem Griffabschnitt (2) ein Gewindeabschnitt in dem Rahmenaufbau ist und der Griffabschnitt (2) einen entsprechenden Gewindeabschnitt zur Aufnahme des Rahmenaufbaus umfasst.

5. Periodontale Sonde (1) nach einem vorstehenden Anspruch, **dadurch gekennzeichnet, dass** der Magnet ein Permanentmagnet ist.

6. Periodontale Sonde (1) nach Anspruch 5, **dadurch gekennzeichnet, dass** der Permanentmagnet in einem Führungsaufbau zum Lenken des magnetischen Flusses eingerichtet ist.

7. Periodontale Sonde (1) nach Anspruch 6, **dadurch gekennzeichnet, dass** der Führungsaufbau ein Rahmenaufbau zum Verbinden des Magnets (7) in dem Griffabschnitt (2) ist.

8. Periodontale Sonde (1) nach einem vorstehenden Anspruch, **dadurch gekennzeichnet, dass** der Magnet (7) ein Elektromagnet ist.

9. Periodontale Sonde (1) nach Anspruch 1, **dadurch gekennzeichnet, dass** der Sensor (8) ein optischer Sensor zum Nachweis der Bewegung des Messmittels (5) in Bezug auf den Griffabschnitt (2) ist.

10. Periodontale Sonde (1) nach einem vorstehenden Anspruch, **dadurch gekennzeichnet, dass** die periodontale Sonde (1) weiter eine Rückführmagnetspule zum Bewegen der Messmittel (5) in eine Startposition nach einem Messvorgang umfasst.

11. Periodontale Sonde (1) nach einem vorstehenden Anspruch, **dadurch gekennzeichnet, dass** das Messmittel (5) eine Sondenfaser (5a) umfasst, die in dem Sondenabschnitt (3) beweglich ist und eine Spitze zum Einsetzen in den Boden der Zahnfleischtasche und eine innerhalb des Griffabschnitts (2) bewegliche Reibungsfaser (5b) aufweist.

12. Periodontale Sonde (1) nach Anspruch 11, **dadurch gekennzeichnet, dass** die Reibungsfaser (5b) mit einer Sondenfaser (5a) zur Ausbildung eines kontinuierlichen Messmittels (5) verbindbar ist.

13. Periodontale Sonde (1) nach Anspruch 11 oder 12, **dadurch gekennzeichnet, dass** die Reibungsfaser (5b) ferromagnetisches Material umfasst.

## Revendications

1. Sonde parodontique (1) pour mesurer la profondeur d'une poche parodontique, ladite sonde parodontique (1) comprenant une portion poignée (2), une portion sonde (3) et un passage (4) s'étendant depuis la portion poignée (2) à travers la portion sonde (3), dans laquelle la sonde parodontique (1) comprend en outre :
- un moyen de mesure (5) s'étendant dans le passage (4) à l'intérieur de la sonde parodontique (1) depuis la portion poignée (2) à travers la portion sonde (3) et au moins partiellement à l'extérieur de la portion sonde (3) de sorte qu'une partie du moyen de mesure (5) à l'extérieur de la portion sonde (3) doit être insérée dans la poche de gomme, ledit moyen de mesure (5) est agencé de façon mobile par rapport au passage (4) ;
- un aimant (7) agencé au moins partiellement à l'intérieur de la sonde parodontique (1) et ledit aimant (7) est agencé dans un contact magnétique avec le moyen de mesure (5) pour fournir une force au moyen de mesure (5) pour commander le mouvement dudit moyen de mesure (5), l'aimant (7) est agencé pour tirer le moyen de mesure (5) vers une surface de friction agencée à l'intérieur dans la portion poignée (2) de la sonde parodontique (1) ; et
- un capteur (8), **caractérisé en ce que** le capteur (8) est un accéléromètre et est agencé pour mesurer le mouvement dudit moyen de mesure (5) à l'intérieur du passage (4) et pour mesurer les inégalités de l'émail de dent et la fin de l'émail de dent de sorte que les écarts dans la dent peuvent être détectés, les inégalités de l'émail de dent sont évaluées en calculant l'écart-type du signal d'accéléromètre lorsque la sonde se déplace le long de la dent de sorte que plus l'écart-type est grand, plus la surface est grossière.

2. Sonde parodontique (1) selon la revendication 1, **caractérisée en ce que** l'aimant (7) est agencé pour tirer le moyen de mesure (5) vers une surface de friction agencée à l'intérieur dans la portion poignée (2) de ladite sonde parodontique (1).

3. Sonde parodontique (1) selon la revendication 1 ou 2, **caractérisée en ce que** l'aimant (7) est agencé dans une structure de cadre comprenant un moyen pour connecter la structure de cadre dans la portion poignée (2).

4. Sonde parodontique (1) selon la revendication 3, **caractérisée en ce que** le moyen pour connecter la structure de cadre dans la portion poignée (2) est une portion filetée dans la structure de cadre et ladite portion poignée (2) comprenant une portion filetée correspondante pour recevoir ladite structure de cadre.

5. Sonde parodontique (1) selon l'une quelconque des revendications précédentes, **caractérisée en ce que** l'aimant est un aimant permanent.

6. Sonde parodontique (1) selon la revendication 5, **caractérisée en ce que** l'aimant permanent est agencé dans une structure de guidage pour diriger le flux magnétique.

7. Sonde parodontique (1) selon la revendication 6, **caractérisée en ce que** la structure de guidage est une structure de cadre pour connecter l'aimant (7) dans la portion poignée (2).

8. Sonde parodontique (1) selon l'une quelconque des revendications précédentes, **caractérisée en ce que** l'aimant (7) est un électroaimant.

9. Sonde parodontique (1) selon la revendication 1, **caractérisée en ce que** le capteur (8) est un capteur optique pour détecter le mouvement du moyen de mesure (5) par rapport à la portion poignée (2).

10. Sonde parodontique (1) selon l'une quelconque des revendications précédentes, **caractérisée en ce que** la sonde parodontique (1) comprend en outre un solénoïde de retour pour déplacer le moyen de mesure (5) dans une position de départ après un processus de mesure.

11. Sonde parodontique (1) selon l'une quelconque des revendications précédentes, **caractérisée en ce que** ledit moyen de mesure (5) comprend une fibre de sonde (5a) mobile dans la portion sonde (3) et ayant un embout à insérer dans le fond de la poche de gomme, et une fibre de friction (5b) mobile à l'intérieur de la portion poignée (2).

12. Sonde parodontique (1) selon la revendication 11, **caractérisée en ce que** la fibre de friction (5b) peut être reliée à une fibre de sonde (5a) pour former un moyen de mesure continu (5).

13. Sonde parodontique (1) selon la revendication 11 ou 12, **caractérisée en ce que** la fibre de friction (5b) comprend un matériau ferromagnétique.
